# DEMANDE DE BREVET EUROPEEN

(11) **EP 0 745 877 A1**
(43) Date de publication de la demande: **04.12.1996**
(21) Numéro de dépôt: 96401002.9
(22) Date de dépôt: 10.05.1996
(51) Int. Cl.: G02B 7/182, G02B 27/62

(54) **Dispositif pour positionner précisément le sommet du miroir secondaire en décentrement par rapport à celui du miroir primaire d'un télescope et télescope équipé d'un tel dispositif**

(30) Priorité: 31.05.1995 FR 9506468
(71) Demandeur: AEROSPATIALE SOCIETE NATIONALE INDUSTRIELLE, 75016 Paris (FR)
(72) Inventeur: Sayede, Frédéric Noel, 06150 Cannes-la-Bocca (FR)
(74) Mandataire: Bonnetat, Christian

(57) **Abrégé**

- La présente invention concerne un dispositif pour positionner précisément le sommet du miroir secondaire (5) en décentrement par rapport à celui du miroir primaire (3) d'un télescope (1), ledit miroir secondaire (5) étant monté sur un support (8), par des moyens de liaison (9).
- Selon l'invention, les moyens de liaison (9) comprennent des premier et second organes de liaison (10) allongés, radiaux et croisés, s'étendant de part et d'autre du support (8) suivant une première direction X-X et une seconde direction Y-Y passant par le centre (0) du support (8), correspondant au sommet (5A) dudit miroir secondaire (5), les premier et second organes de liaison (10) étant longitudinalement rigides et transversalement souples, et pouvant être commandés, chacun, pour se déplacer suivant leur extension longitudinale par des moyens d'actionnement respectifs (11).

## Description

La présente invention concerne un dispositif pour positionner précisément le sommet du miroir secondaire en décentrement par rapport à celui du miroir primaire d'un télescope, et un télescope équipé d'un tel dispositif.

On sait que l'un des problèmes qui se posent à des télescopes, notamment des télescopes destinés à travailler dans l'espace, est d'obtenir et/ou de conserver en service l'alignement des axes optiques des miroirs primaire et secondaire, en d'autres termes de maintenir les éléments optiques en position, cela sous les diverses agressions extérieures auxquelles peuvent être soumis des télescopes notamment spatiaux. Cette fonction est difficile à assurer à l'aide d'une structure passive.

La présente invention a pour but d'éviter cet inconvénient et concerne un dispositif permettant une correction active d'un dépositionnement éventuel entre les sommets en décentrement des miroirs primaire et secondaire d'un télescope.

A cet effet, le dispositif pour positionner précisément le sommet du miroir secondaire en décentrement par rapport à celui du miroir primaire d'un télescope, ledit miroir secondaire étant monté sur un support relié à un cadre annulaire, au moins sensiblement concentrique audit support, par des moyens de liaison, est remarquable, selon l'invention, en ce que lesdits moyens de liaison comprennent des premier et second organes de liaison allongés, radiaux et croisés, s'étendant de part et d'autre dudit support suivant une première direction X-X et une seconde direction Y-Y passant par le centre dudit support, correspondant au sommet dudit miroir secondaire, lesdits premier et second organes de liaison étant longitudinalement rigides et transversalement souples, et pouvant être commandés, chacun, pour se déplacer suivant leur extension longitudinale par des moyens d'actionnement respectifs.

De cette façon, tout dépositionnement des sommets optiques en décentrement des miroirs primaire et secondaire pourra être compensé par un déplacement du support du miroir secondaire dans le plan défini par les axes X-X et Y-Y en utilisant la possibilité de flexion desdits organes de liaison, et cela sans que lesdits moyens d'actionnement aient à développer des efforts importants. Un tel dispositif est ainsi précis et peu contraignant.

Avantageusement, chacun desdits organes de liaison est constitué d'une paire de lames, s'étendant dans le prolongement l'une de l'autre, lesdites première et seconde paires de lames étant agencées orthogonalement l'une par rapport à l'autre et perpendiculairement au plan défini par lesdites première X-X et seconde Y-Y directions.

De préférence, chacune desdites lames est fixée, d'une part, audit support et, d'autre part, à une lamelle souple, disposée perpendiculairement à ladite lame et fixée au cadre du miroir secondaire.

Dans ce dernier cas, lesdits moyens d'actionnement comprennent, pour chacune desdites paires de lames, un actionneur destiné à agir sur ladite paire de lames par l'intermédiaire de la lamelle souple sur laquelle il s'appuie.

Par ailleurs, chacune desdites lamelles peut être solidarisée à la face intérieure interne du cadre du miroir secondaire par l'intermédiaire de barrettes de support.

Avantageusement, dans ce cas, chaque actionneur est un actionneur piézo-électrique, fixé à la face extérieure interne du cadre du miroir secondaire et solidaire de la lamelle correspondante.

Bien que les moyens d'actionnement puissent, bien entendu, être commandés directement, on peut envisager, selon une autre caractéristique de l'invention, que le dispositif comprenne au moins un capteur destiné à mesurer le dépositionnement en décentrement des sommets desdits miroirs primaire et secondaire, relié à des moyens de commande desdits moyens d'actionnement.

Les figures du dessin annexé feront bien comprendre comment l'invention peut être réalisée.

La figure 1 est une vue schématique en perspective d'un télescope équipé du dispositif selon l'invention.

La figure 2 est une coupe, transversale à l'axe longitudinal du télescope, du cadre du miroir secondaire.

La figure 3 est une vue en perspective de détail illustrant l'agencement d'un actionneur selon l'invention.

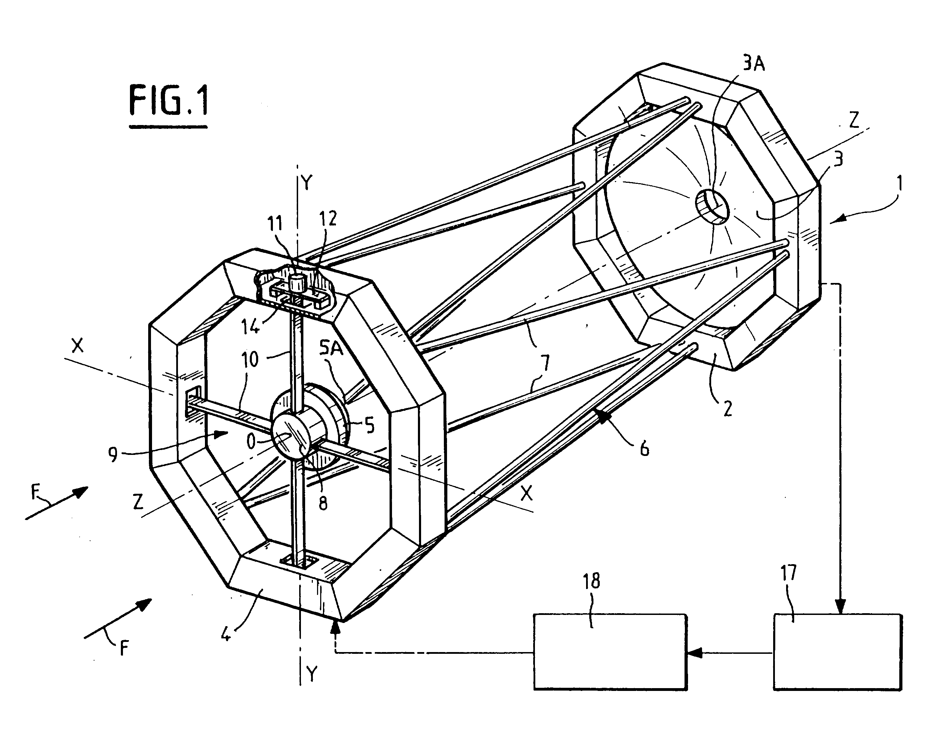

Le télescope spatial 1 montré sur la figure 1 comporte, de façon usuelle, un premier cadre 2 (arrière, considérant le sens de propagation de la lumière reçue, indiqué par les flèches F) portant le miroir primaire 3 (concave) de sommet 3A et un second cadre 4 (avant) portant le miroir secondaire 5 (convexe) de sommet 5A. Les premier et second cadres 2 et 4 présentent une forme annulaire, de section transversale par exemple octogonale, comme représenté, et sont reliés ensemble par un treillis 6 constitué d'un certain nombre de barres de liaison 7.

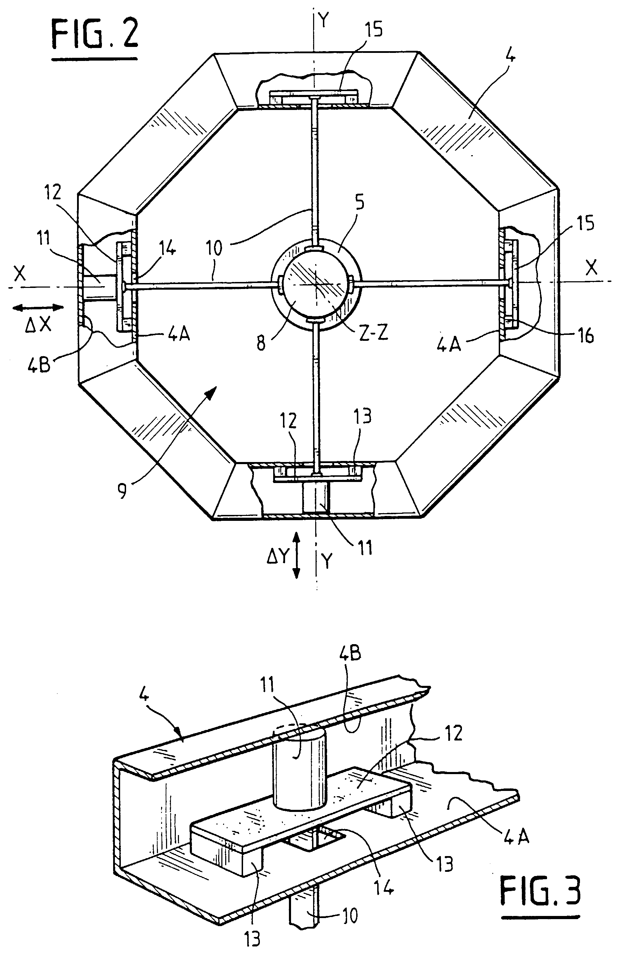

Par ailleurs, le miroir secondaire 5 est monté sur un support 8 relié au cadre 4 par une structure 9 (dite "araignée") à quatre branches 10, constitués chacune d'une lame longitudinalement rigide et transversalement souple, lesdites branches 10 s'étendant par paire suivant une première direction X-X et une seconde direction Y-Y, radiales et croisées, de préférence à angle droit, et définissant un plan (plan du dessin sur la figure 2) orthogonal à l'axe longitudinal Z-Z du télescope, passant par les sommets des miroirs primaire 3 et secondaire 5, lesdites première et seconde directions passant par le centre 0 du support 8, correspondant au sommet 5A du miroir secondaire 5. De plus, comme montré, les lames 10 sont perpendiculaires au plan défini par les axes X-X et Y-Y, c'est-à-dire que leur largeur s'étend parallèlement soit au plan défini par les axes X-X et Z-Z, soit au plan défini par les axes Y-Y et Z-Z, et elles sont solidarisées, chacune, au support 8.

En outre, pour commander le déplacement, suivant leur extension longitudinale, de chaque paire de lames 10, il est prévu, pour chaque paire de lames 10, un actionneur 11, notamment piézo-électrique, logé à l'intérieur du cadre 4 et fixé à la face extérieure interne 4B de celui-ci, et destiné à agir sur une lamelle 12 disposée perpendiculairement à la lame 10, à laquelle elle est solidarisée, et liée à la face intérieure interne correspondante 4A du cadre 4 par l'intermédiaire de barrettes de support 13, une ouverture 14 étant prévue pour le passage de la lame 10 correspondante. Egalement, l'autre lame de chaque paire est solidaire d'une lamelle souple 15, disposée perpendiculairement à celle-ci et fixée à la face intérieure interne correspondante 4A par des barrettes de support 16 (figure 2).

Ainsi, on conçoit que, pour un petit déplacement ΔX ou ΔY de l'ordre de, par exemple, quelques centaines de micromètres, commandé par l'actionneur 11 respectif, les lamelles souples 15 perpendiculaires au déplacement vont fléchir de même que les lames 10 perpendiculaires de l"'araignée", permettant un repositionnement dans le plan X-X, Y-Y du sommet du miroir secondaire. Grâce à l'introduction d'une souplesse dans les directions d'actionnement, les actionneurs 11 n'ont pas d'efforts importants à développer pour déplacer les éléments structuraux.

Dans un tel système, le guidage est sans jeu et ne nécessite pas d'éléments présentant des roulements ou frottements. Afin d'éviter tout flambage des lames, les actionneurs devront agir en tirant sur les lames, et non en les poussant, sur toute la course de recentrage. C'est ainsi que ces actionneurs seront avantageusement précontraints en faisant fléchir les lamelles sur toute la course de l'actionneur. Bien entendu, il est possible qu'un repositionnement dans une direction nécessite une correction dans l'autre direction (défaut induit).

Pour effectuer le positionnement ou repositionnement du sommet du miroir secondaire sur le sommet du miroir primaire, on peut commander directement les actionneurs, notamment au sol pour des réglages préliminaires, ou utiliser, comme montré symboliquement sur la figure 1, une boucle de pilotage comportant un (ou plusieurs) capteur de dépositionnement 17, relié à une commande 18 des actionneurs 11.

## Revendications

1. Dispositif pour positionner précisément le sommet du miroir secondaire (5) en décentrement par rapport à celui du miroir primaire (3) d'un télescope (1), ledit miroir secondaire (5) étant monté sur un support (8) relié à un cadre annulaire (4), au moins sensiblement concentrique audit support, par des moyens de liaison (9),
caractérisé en ce que lesdits moyens de liaison (9) comprennent des premier et second organes de liaison (10) allongés, radiaux et croisés, s'étendant de part et d'autre dudit support (8) suivant une première direction X-X et une seconde direction Y-Y passant par le centre (0) dudit support (8), correspondant au sommet (5A) dudit miroir secondaire (5), lesdits premier et second organes de liaison (10) étant longitudinalement rigides et transversalement souples, et pouvant être commandés, chacun, pour se déplacer suivant leur extension longitudinale par des moyens d'actionnement respectifs (11).

2. Dispositif selon la revendication 1,
caractérisé en ce que chacun desdits organes de liaison est constitué d'une paire de lames (10, 10), s'étendant dans le prolongement l'une de l'autre, lesdites première et seconde paires de lames (10, 10) étant agencées orthogonalement l'une par rapport à l'autre et perpendiculairement au plan défini par lesdites première X-X et seconde Y-Y directions.

3. Dispositif selon la revendication 2,
caractérisé en ce que chacune desdites lames (10) est fixée, d'une part, audit support (8) et, d'autre part, à une lamelle souple (12, 15), disposée perpendiculairement à ladite lame (10) et fixée au cadre (4) du miroir secondaire (5).

4. Dispositif selon la revendication 3,
caractérisé en ce que lesdits moyens d'actionnement comprennent, pour chacune desdites paires de lames (10, 10), un actionneur (11) destiné à agir sur ladite paire de lames (10, 10) par l'intermédiaire de la lamelle souple (12) sur laquelle il s'appuie.

5. Dispositif selon la revendication 3 ou 4,
caractérisé en ce que chacune desdites lamelles (12, 15) est solidarisée à la face intérieure interne (4A) du cadre (4) du miroir secondaire (5) par l'intermédiaire de barrettes de support (13, 16).

6. Dispositif selon la revendication 5,
caractérisé en ce que chaque actionneur (11) est un actionneur piézo-électrique, fixé à la face extérieure interne (4B) du cadre (4) du miroir secondaire (5) et solidaire de la lamelle correspondante (12).

7. Dispositif selon l'une quelconque des revendications 1 à 6,
caractérisé en ce qu'il comprend au moins un capteur (17) destiné à mesurer le dépositionnement en décentrement des sommets desdits miroirs primaire (3) et secondaire (5), relié à des moyens de commande (18) desdits moyens d'actionnement (11).

8. Télescope, caractérisé en ce qu'il est équipé d'un dispositif selon l'une quelconque des revendications 1 à 7.
